# EUROPÄISCHE PATENTANMELDUNG

(11) **EP 3 029 277 A1**
(43) Veröffentlichungstag der Anmeldung: **08.06.2016**
(21) Anmeldenummer: 15198120.6
(22) Anmeldetag: 04.12.2015
(51) Int. Cl.: F01D 25/18, F02C 7/06

(54) **FLUGTRIEBWERK MIT EINER VORRICHTUNG ZUM ABSCHEIDEN VON ÖL UND EINER EINRICHTUNG ZUR ERHÖHUNG EINES DRUCKS**

(30) Priorität: 05.12.2014 DE 102014117960
(71) Anmelder: Rolls-Royce Deutschland Ltd & Co KG, 15827 Blankenfelde-Mahlow (DE)
(72) Erfinder: Beier, Jürgen, 15732 Schulzendorf (DE); Venter, Gideon, 14165 Berlin (DE)
(74) Vertreter: Schmidt, Martin Michael

(57) **Zusammenfassung**

Es wird ein Flugtriebwerk (1) mit einer Vorrichtung (17) zum Abscheiden von Öl aus einem Luft-Öl-Volumenstrom beschrieben, wobei ein Fluidvolumenstrom mit geringerer Ölbeladung als der der Vorrichtung (17) zugeführte Luft-Öl-Volumenstrom über einen Leitungsbereich (29) aus der Vorrichtung (17) abführbar ist. Der Fluidvolumenstrom ist über den Leitungsbereich (29) einer Einrichtung (28) zuführbar, mittels der ein Druck in dem Leitungsbereich (29) stromab der Einrichtung (28) erhöhbar ist.

## Beschreibung

Die Erfindung betrifft ein Flugtriebwerk mit einer Vorrichtung zum Abscheiden von Öl aus einem der Vorrichtung zugeführten Luft-Öl-Volumenstrom gemäß der im Oberbegriff des Patentanspruches 1 näher definierten Art.

Bei aus der Praxis bekannten Strahltriebwerken wird im Betrieb ölhaltige Verbrauchsluft aus Lagerkammern und aus einem Öltank über separate Leitungen einer Vorrichtung zum Abscheiden von Öl aus einem Luft-Öl-Volumenstrom zugeführt, die als Ölabscheider, vorzugsweise als Zentrifugalölabscheider, ausgeführt sein kann und auch als Breather bezeichnet wird. Die Separierung großer Ölpartikel aus der Verbrauchsluft bzw. den Luft-Öl-Volumenströmen aus den Lagerkammern und dem Öltank erfolgt über einen im Bereich des Breathers vorgesehenen und als Zentrifuge wirkenden Umlenkbereich. Ölpartikel mit kleineren Durchmessern werden durch einen im Ölabscheider angeordneten Metallschaum aufgefangen und so ebenfalls aus der Luft gefiltert. Das mittels dieser Vorgehensweise abgeschiedene Öl wird dem Ölkreislauf wieder zugeführt. Die gereinigte Luft wird an die Umwelt abgegeben. Unter gereinigter Luft wird ein aus dem Ölabscheider abgeführter Fluidvolumenstrom verstanden, der eine geringere Ölbeladung als der dem Ölabscheider zugeführte Luft-Öl-Volumenstrom aufweist.

Bei herkömmlichen Triebwerkssystemen weist die gereinigte Luft einen Druck auf, der nur geringfügig oberhalb des Umgebungsdrucks eines Flugtriebwerks liegt. Bei Vorliegen eines solchen Druckniveaus ist die gereinigte Luft nachteilhafterweise nicht in einen Nebenstromkanal eines Flugtriebwerks einleitbar, da in einem Nebenstromkanal üblicherweise den Umgebungsdruck um ein Vielfaches übersteigende Betriebsdrücke vorliegen. Um die gereinigte Luft dennoch in den Nebenstromkanal einleiten zu können, wird bei weiteren Triebwerkssystemen die gereinigte Luft mit einem Luftvolumenstrom beaufschlagt, der einem Kernstrom eines Triebwerks entnommen wird und der ein höheres Druckniveau aufweist als der durch den Nebenstromkanal geführte Luftvolumenstrom. Der dem Kernstrom entnommene Luftvolumenstrom wird auch als Kompressorzapfluft bezeichnet und dient zur Erhöhung des Drucks der gereinigten Luft, der anschließend ein für die Einleitung der gereinigten Luft in den Nebenstromkanal erforderliches Druckniveau aufweist.

Die letztgenannten Triebwerkssysteme haben allerdings den Nachteil, dass die Abzweigung von Kompressorzapfluft einen Wirkungsgrad eines Flugtriebwerks beeinträchtigt und einen höheren Treibstoffverbrauch und einen Anstieg der Temperatur im Luftsystem zur Folge hat. Darüber hinaus erfordert diese Vorgehensweise Kontrolleinrichtungen zur Aufrechterhaltung einer ausreichend großen Druckdifferenz zwischen dem Druck der gereinigten Luft und dem Druck in dem einzuleitenden Bereich des Nebenstromkanals.

Aus der EP 2 559 869 A1 ist es bekannt, stromauf einer Abscheideeinrichtung eine Synchronisiereinrichtung anzuordnen, mittels welcher eine der Abscheideeinrichtung zugeführte Strömung eines Luft-Öl-Gemischs mit einer Drehung der Abscheideeinrichtung synchronisiert wird. Weiterhin ist in der US 6,033,450 ein stromauf eines Ölabscheiders angeordnetes Schaufelrad offenbart, mit dem bereits im Bereich des Schaufelrads eine Rotationsgeschwindigkeit des dem Ölabscheider zugeführten Luft-Öl-Gemischs mit einer damit einhergehenden Druckerhöhung erzielt wird, wobei mittels des Schaufelrads eine Trennung des Luft-Öl-Gemischs im Bereich des Schaufelrads erreicht wird.

Mit den beschriebenen Anordnungen der Schaufelräder stromauf der jeweiligen Abscheideeinrichtung bzw. des Ölabscheiders ist allerdings der Druck der gereinigten Luftströmung stromab des Breathers nicht in dem für die Einleitung des Fluidvolumenstroms in den Nebenstromkanal erforderlichen Umfang anhebbar. Im Bereich der Schaufelräder und damit stromauf des Ölabscheiders wird der Druck des Luft-Öl-Volumenstroms dabei gegebenenfalls erhöht. Die aus dem Stand der Technik bekannten Ausführungen sind mit Auslassöffnungen zum Ausleiten von abgeschiedenem Öl aus dem Ölabscheider ausgebildet. Beim Durchströmen des Ölabscheiders treten im Bereich der Auslassöffnungen Druckverluste auf, die den Druck stromab des Ölabscheiders wieder auf ein unerwünscht niedriges Niveau absenken.

Der vorliegenden Erfindung liegt die Aufgabe zugrunde, ein mit hohem Wirkungsgrad betreibbares Flugtriebwerk mit einer Vorrichtung zum Abscheiden von Öl aus einem der Vorrichtung zugeführten Luft-Öl-Volumenstrom zur Verfügung zu stellen, mit welchem im Bereich der Vorrichtung gereinigte Luft in gewünschtem Umfang aus dem Flugtriebwerk abführbar ist.

Erfindungsgemäß wird diese Aufgabe mit einem Flugtriebwerk mit den Merkmalen des Patentanspruches 1 gelöst.

Das erfindungsgemäße Flugtriebwerk ist mit einer Vorrichtung zum Abscheiden von Öl aus einem Luft-Öl-Volumenstrom ausgeführt, wobei ein Fluidvolumenstrom mit geringerer Ölbeladung als der der Vorrichtung zugeführte Luft-Öl-Volumenstrom über einen Leitungsbereich aus der Vorrichtung abführbar ist.

Erfindungsgemäß ist der Fluidvolumenstrom über den Leitungsbereich einer Einrichtung zuführbar, mittels der ein Druck in dem Leitungsbereich stromab der Einrichtung erhöhbar ist.

Durch das Vorsehen einer separaten Einrichtung stromab der Vorrichtung ist ein Druck des Fluidvolumenstroms bzw. der gereinigten Luft stromab der Vorrichtung auf konstruktiv einfache Weise in gewünschtem Umfang erhöhbar, ohne dass hierfür unter Hochdruck stehende Luft aus einem Kernstromkanal des Flugtriebwerks entnommen werden muss. Temperaturen in einem Luftsystem des Triebwerks sind hierdurch kleiner als bei der Verwendung von Hochdruckluft aus dem Kernstromkanal. Auch Dichteigenschaften des Triebwerks werden mit dem erfindungsgemäßen Flugtriebwerk nicht negativ beeinflusst. Ein Wirkungsgrad des Flugtriebwerks ist hierdurch vorteilhafterweise hoch.

Mit der erfindungsgemäßen Einrichtung kann der Druck des Fluidvolumenstroms bzw. der gereinigten Luft stromab der Einrichtung im Betrieb des Flugtriebwerks auf verlustarme Weise auf ein gewünschtes Druckniveau angehoben werden, so dass eine gewünschte Druckdifferenz zwischen dem Druck der gereinigten Luft stromab der Einrichtung und dem Bereich, in dem die gereinigte Luft aus dem Flugtriebwerk abgeführt wird, erzielbar ist. Da die Einrichtung stromab der Vorrichtung angeordnet ist und die im Bereich der Einrichtung bedruckte gereinigte Luft direkt aus dem Flugtriebwerk abführbar ist, können mit der erfindungsgemäßen Anordnung der Einrichtung auf konstruktive einfache Weise Druckverluste der gereinigten Luft stromab der Einrichtung vermieden werden. Ein Rückdruck in einem Luftsystem des Triebwerks wird dabei grundsätzlich durch einen Druck im Bereich eines Auslasses der gereinigten Luft aus dem Triebwerk bestimmt.

Durch die Druckerhöhung stromab der Einrichtung wird im Betrieb des Flugtriebwerks stromauf der Einrichtung ein Druck reduziert. Hierdurch wird durch die Einrichtung ein der Vorrichtung zum Abscheiden von Öl beispielsweise von Lagerkammern und einem Öltank zugeführter Luft-Öl-Volumenstrom vorteilhafterweise in Richtung der Vorrichtung gesaugt. Im Bereich der Lagerkammern stellt sich bei der erfindungsgemäßen Ausführung gegenüber herkömmlichen Ausführungen ohne eine Einrichtung zur Erhöhung eines Drucks im Betrieb des Flugtriebwerks ein geringerer Druck ein, so dass zur Abdichtung der Lagerkammern eine geringere Menge an Druckluft erforderlich ist, die dem Kernstrom des Flugtriebwerks entnommen wird. Hierdurch wird wiederum in vorteilhafter Weise eine Verlustleistung des Triebwerks reduziert.

Wenn die Einrichtung zur Erhöhung eines Drucks bei einer vorteilhaften Weiterbildung des erfindungsgemäßen Flugtriebwerks bzw. Strahltriebwerks innerhalb des Leitungsbereichs angeordnet ist, ist die Einrichtung auf bauraumgünstige Weise in das Flugtriebwerk integrierbar.

Bei einer vorteilhaften Ausführung des erfindungsgemäßen Flugtriebwerks ist es vorgesehen, dass der Leitungsbereich mit einem weiteren Leitungsbereich zusammenwirkt, wobei der weitere Leitungsbereich in einen Kernstromkanal oder einen Nebenstromkanal des Flugtriebwerks mündet. Die über den weiteren Leitungsbereich geführte gereinigte Luft kann bei entsprechend großer Druckerhöhung im Bereich der Einrichtung prinzipiell in einen beliebigen Bereich des Nebenstromkanals, des Kernstromkanals oder auch direkt in die Umgebung eingeleitet werden, so dass der weitere Leitungsbereich mit entsprechenden Gewichtsvorteilen vorteilhafterweise kurz ausgeführt sein kann. Beispielsweise kann der Leitungsbereich auch in einen als Mixer bezeichneten Bereich des Flugtriebwerks münden, in dessen Bereich der Nebenstromkanal und der Kernstromkanal miteinander verbunden sind. Die Einleitung der gereinigten Luft in den Nebenstromkanal oder den Kernstromkanal hat weiterhin den Vorteil, dass durch einen gegebenenfalls in der gereinigten Luft enthaltenen Restölanteil ein Gehäuse des Triebwerks nicht von Öl eingefärbt wird. Zudem wird hierbei die Gefahr der Entstehung einer Rauchfahne reduziert.

Die Einrichtung zur Erhöhung eines Drucks ist vorzugsweise als Kompressoreinrichtung, insbesondere als Axialkompressoreinrichtung oder als Radialkompressoreinrichtung ausgeführt. Eine vorzugsweise einen gesamten Querschnitt des Leitungsbereichs einnehmende Axialkompressoreinrichtung ist dabei insbesondere zu bevorzugen, wenn im Bereich der Einrichtung lediglich eine geringe Druckerhöhung zu erzielen ist und durch den Leitungsbereich ein relativ großer Volumenstrom der gereinigten Luft geführt wird. Soll dagegen im Bereich der Einrichtung eine große Druckerhöhung erzielt werden, wobei ein relativ geringer Volumenstrom der gereinigten Luft durch den Leitungsbereich geführt wird, eignet sich insbesondere eine Radialkompressoreinrichtung.

Ein Druck stromab der Einrichtung kann bei einer konstruktiv einfachen Ausführung eines Flugtriebwerks dadurch erhöht werden, dass die Einrichtung zur Erhöhung eines Drucks mit mehreren umfangsseitig verteilt angeordneten Schaufeln ausgeführt ist. Die Einrichtung kann hierbei beispielsweise als Flügelrad ausgeführt sein.

Um die im Bereich der Einrichtung erzielte Druckerhöhung in gewünschtem Umfang entsprechend der vorliegenden Betriebszustände vorsehen zu können, sind die Schaufeln der Einrichtung bei einer vorteilhaften Ausführung des erfindungsgemäßen Flugtriebwerks bezüglich einer Strömungsrichtung der gereinigten Luft in axialer Richtung, in radialer Richtung und/oder in Umfangsrichtung gebogen bzw. gekrümmt ausgeführt. Zudem kann es auch vorgesehen sein, dass die Schaufeln bezüglich der axialen Richtung, der radialen Richtung oder der Umfangsrichtung der Einrichtung geneigt sind.

Bei einer besonders bauraumgünstigen Ausführung eines erfindungsgemäßen Flugtriebwerks sind die Schaufeln der Einrichtung zur Erhöhung eines Drucks integral mit insbesondere in axialer Richtung der Einrichtung verlaufenden Stegen bzw. Fillets ausgeführt, die beispielweise zur Lagerung eines Teils der Vorrichtung zum Abscheiden von Öl, insbesondere von einem porösen Bereich der als Ölabscheider ausgeführten Vorrichtung, vorgesehen sind. Über die bezüglich der Vorrichtung insbesondere umfangsseitig verteilt angeordneten Stege bzw. Fillets wird der poröse Bereich bzw. ein Metallschaum der Vorrichtung auf einem Durchmesserbereich gelagert, der größer ist als derjenige, auf dem die Einrichtung gelagert ist.

Der Leitungsbereich, dem die Einrichtung zugeordnet ist, ist bei einer vorteilhaften Ausführung des erfindungsgemäßen Flugtriebwerks durch eine zumindest abschnittsweise als Hohlwelle ausgeführte Welle gebildet, die insbesondere eine Hilfsgerätegetriebewelle einer Hilfsgerätegetriebeeinrichtung darstellt. Wenn die Einrichtung drehfest mit der Welle verbunden ist, wird die Einrichtung vorteilhafterweise gemeinsam mit der Vorrichtung über die Welle bzw. Hilfsgerätegetriebewelle angetrieben.

Die Hilfsgerätegetriebeeinrichtung kann hierbei sowohl im Bereich eines Außengehäuses des Flugtriebwerks als auch im Bereich eines einen Nebenstromkanal von einem Kernstromkanal trennenden Gehäuses angeordnet sein.

Die Einrichtung zur Erhöhung eines Drucks kann bei einer konstruktiv einfachen Ausführung der Erfindung einen schraubenförmig ausgeführten Bereich aufweisen, wobei die Einrichtung insbesondere einen kompletten kreisförmigen Querschnitt des vorzugsweise durch die Hohlwelle gebildeten Leitungsbereichs einnimmt und vorzugsweise sowohl in Umfangsrichtung, beispielsweise mittels einer Nut-Feder-Verbindung, als auch in axialer Richtung, beispielsweise mittels federbelasteten Sicherungsringen, gegenüber dem Leitungsbereich fixiert ist. Hierdurch wird der Leitungsbereich zusammen mit der Einrichtung mit identischer Drehzahl angetrieben. Der von der im Bereich der Vorrichtung gereinigten Luft durchströmte Strömungsquerschnitt verjüngt sich dabei in Strömungsrichtung der gereinigten Luft im Bereich der Einrichtung, so dass bei einer Drehung der Einrichtung der Druck stromab der Einrichtung in gewünschtem Umfang erhöht wird.

Um die Einrichtung auf konstruktiv einfache Weise anzutreiben, kann die Einrichtung zur Erhöhung eines Drucks von einer Hilfsgerätegetriebewelle einer Hilfsgerätegetriebeeinrichtung angetrieben werden, die insbesondere auch zum Antrieb der Vorrichtung zum Abscheiden von Öl vorgesehen ist. Eine Drehachse der Einrichtung ist hierbei insbesondere konzentrisch zu einer Drehachse der Vorrichtung angeordnet.

Bei einer vorteilhaften Ausführung eines erfindungsgemäßen Flugtriebwerks weist die Vorrichtung zum Abscheiden von Öl einen in Rotation versetzbaren porösen Bereich auf, der im Strömungsweg des der Vorrichtung beispielsweise aus einer Lagerkammer oder einem Öltank zugeführten Luft-Öl-Volumenstroms angeordnet ist und von dem Luft-Öl-Volumenstrom durchströmbar ist. Durch die Vorrichtung, die als Ölabscheider, vorzugsweise als Zentrifugalölabscheider, ausgeführt sein kann und auch als Breather bezeichnet wird, können Ölpartikel aus dem der Vorrichtung zugeführten Luft-Öl-Volumenstrom auf einfache Weise abgetrennt werden und beispielsweise einem Öltank zugeführt werden. Zur Separierung von großen Ölpartikeln ist insbesondere ein als Zentrifuge wirkender Bereich der Vorrichtung vorgesehen, wohingegen Ölpartikel mit kleineren Durchmessern vorteilhafterweise durch den im Ölabscheider angeordneten Metallschaum aufgefangen und so ebenfalls aus der Luft gefiltert werden können.

Sowohl die in den Patentansprüchen angegebenen Merkmale als auch die in den nachfolgenden Ausführungsbeispielen des erfindungsgemäßen Flugtriebwerks angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Flugtriebwerks ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine stark schematisierte Längsschnittansicht eines Flugtriebwerks mit einer im Bläsergehäuse angeordneten Nebenaggregategetriebeeinrichtung, wobei ein Leitungsbereich ersichtlich ist, mittels welchem im Bereich einer Vorrichtung zum Abscheiden von Öl gereinigte Luft stromab einer zur Durchführung von Medien vorgesehenen Hohlstrebe in einen Nebenstromkanal einleitbar ist;
- Fig. 2: eine der Fig. 1 entsprechende Darstellung eines Flugtriebwerks, wobei im Bereich einer Vorrichtung zum Abscheiden von Öl gereinigte Luft über einen Leitungsbereich stromauf der Hohlstrebe in den Nebenstromkanal einleitbar ist;
- Fig. 3: eine der Fig. 1 und Fig. 2 entsprechende Darstellung eines Flugtriebwerks, wobei eine Nebenaggregategetriebeeinrichtung im Bereich eines einen Nebenstromkanal von einem Triebwerkskerns trennenden Gehäuses montiert ist, und wobei ein Leitungsbereich ersichtlich ist, mittels welchem im Bereich der Vorrichtung zum Abscheiden von Öl gereinigte Luft stromab der Hohlstrebe in den Nebenstromkanal einleitbar ist;
- Fig. 4: eine stark schematisierte Darstellung eines Teilbereichs des Flugtriebwerks gemäß Fig. 1 bis Fig. 3, der die Nebenaggregategetriebeeinrichtung mit einer Vorrichtung zum Abscheiden von Öl und einer Einrichtung zur Erhöhung eines Drucks umfasst;
- Fig. 5: eine vergrößerte Darstellung eines Bereichs der Nebenaggregategetriebeeinrichtung gemäß Fig. 4 mit einer ersten Ausführungsform der Einrichtung zur Erhöhung des Drucks;
- Fig. 6: eine vereinfachte Ansicht der Einrichtung zur Erhöhung des Drucks gemäß Fig. 5 in Längsrichtung der Einrichtung in Alleinstellung;
- Fig. 7: eine vergrößerte Darstellung des der Fig. 5 entsprechenden Bereichs der Nebenaggregategetriebeeinrichtung mit einer zweiten Ausführungsform der Einrichtung zur Erhöhung des Drucks;
- Fig. 8: eine vereinfachte ausschnittsweise Schnittdarstellung entlang einer Längsmittelachse der Einrichtung zur Erhöhung des Drucks gemäß Fig. 7;
- Fig. 9: eine vergrößerte Darstellung eines Bereichs der Nebenaggregategetriebeeinrichtung gemäß Fig. 4 mit einer dritten Ausführungsform der Einrichtung zur Erhöhung des Drucks;
- Fig. 10: eine vergrößerte Darstellung eines Bereichs der Nebenaggregategetriebeeinrichtung gemäß Fig. 4 mit einer vierten Ausführungsform der Einrichtung zur Erhöhung des Drucks; und
- Fig. 11: eine vereinfachte Ansicht der Einrichtung zur Erhöhung des Drucks gemäß Fig. 10 in Längsrichtung der Einrichtung in Alleinstellung.

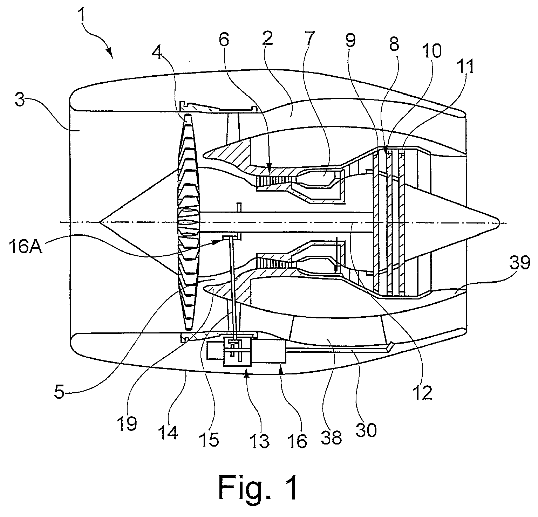

In Fig. 1 ist ein Flugtriebwerk bzw. Strahltriebwerk 1 in einer Längsschnittansicht gezeigt. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Flugtriebwerk 1 in einen Nebenstrom und einen Kernstrom auf, wobei der Nebenstrom durch den Nebenstromkanal 2 und der Kernstrom in einen Triebwerkskern 5 bzw. Kernstromkanal strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10 und 11 auf, welche mit im Wesentlichen vergleichbarer Bauweise ausgebildet sind und mit einer Triebwerksachse 12 verbunden sind.

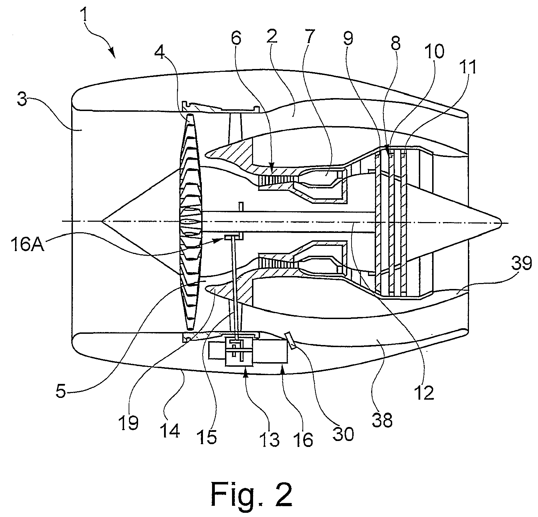

Bei der Ausführung des Strahltriebwerks 1 gemäß Fig. 1 und Fig. 2 ist eine Hilfsgerätegetriebeeinrichtung bzw. Nebenaggregategetriebeeinrichtung 13 in einem äußeren Triebwerksgehäuse 14 angeordnet, das den Nebenstromkanal 2 radial außenseitig begrenzt und den äußeren Umfangsbereich des Strahltriebwerkes 1 darstellt. Die Nebenaggregategetriebeeinrichtung 13 ist vorliegend über eine in radialer Richtung des Stahltriebwerks 1 verlaufende Antriebswelle 15 über ein inneres Getriebe 16A mit der Triebwerksachse 12 verbunden und wird somit von der Triebwerksachse 12 im Betrieb des Stahltriebwerks 1 angetrieben bzw. mit Drehmoment versorgt. Von der Nebenaggregategetriebeeinrichtung 13 werden verschiedene Nebenaggregate 16 und eine Vorrichtung 17 bzw. ein Ölabscheider, der auch als Breather bezeichnet wird, in gewünschtem Umfang mit Drehmoment beaufschlagt. Zusätzlich ist im Bereich der Nebenaggregategetriebeeinrichtung 13 auch ein Öltank 18 vorgesehen, der ein Hydraulikfluidreservoir darstellt, aus dem Öl zur Kühlung und Schmierung verschiedener Bereiche des Strahltriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Strahltriebwerkes 1, entnommen wird.

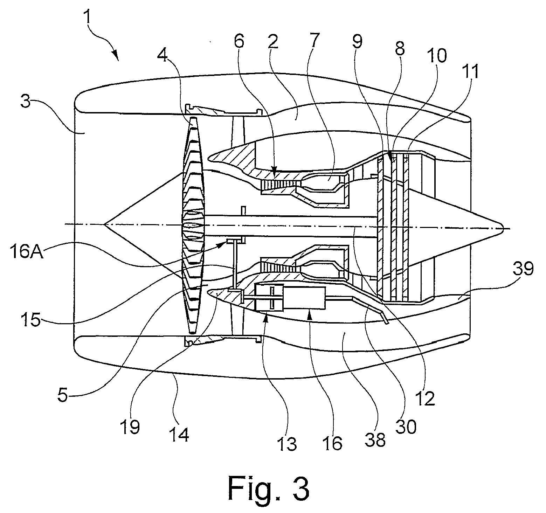

Im Unterschied hierzu ist die Nebenaggregategetriebeeinrichtung 13 mit den Nebenaggregaten 16 und dem Ölabscheider 17 bei der Ausführung des Strahltriebwerks 1 gemäß Fig. 3 in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet.

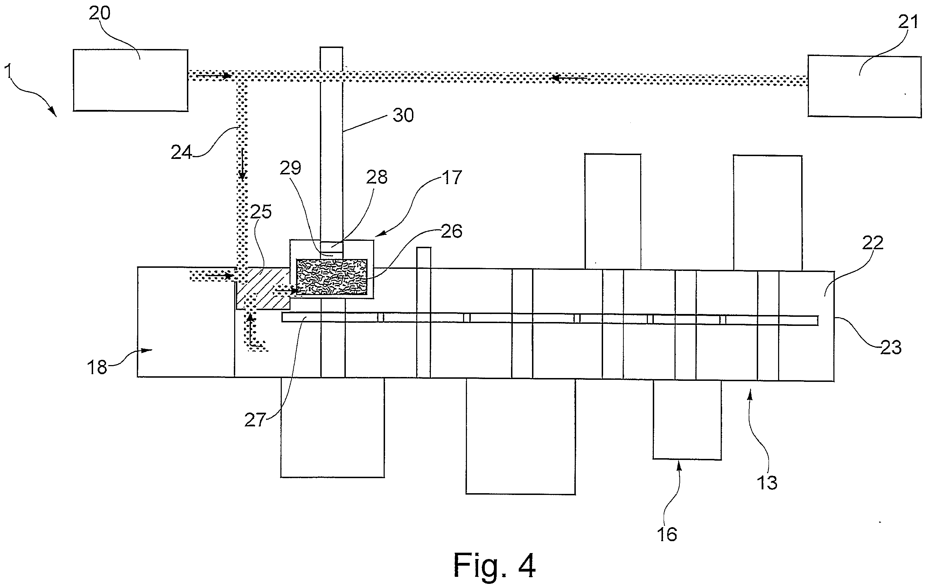

Fig. 4 zeigt den Teil des Flugtriebwerks 1 in stark schematisierter Form, in dem die Nebenaggregategetriebeeinrichtung 13 angeordnet ist. Der Ölabscheider 17 steht vorliegend mit dem Öltank 18, einer vorderen Lagerkammer 20, einer hinteren Lagerkammer 21 sowie einem Innenraum 22 eines Gehäuses 23 der Nebenaggregategetriebeeinrichtung 13 in Verbindung, die alle mit Öl beaufschlagte Bereiche des Flugtriebwerks 1 darstellen. Die Lagerkammern 20, 21 werden im Betrieb des Flugtriebwerks 1 mit Öl aus dem Öltank 18 zum Schmieren und Kühlen beaufschlagt.

Bei der in Fig. 4 gezeigten Ausführungsform des Flugtriebwerks 1 sind jeweils ein Luft-Öl-Volumenstrom aus der vorderen Lagerkammer 20 und der hinteren Lagerkammer 21 in Richtung eines Leitungsbereichs 24 führbar, der vorliegend in eine dem Ölabscheider 17 vorgeschaltete Vorkammer 25 mündet. Des Weiteren ist auch der Öltank 18 vorliegend mit der Vorkammer 25 verbunden, um einen Luft-Öl-Volumenstrom aus dem Öltank 18 sowie die Luft-Öl-Volumenströme der Lagerkammern 20, 21 über den Leitungsbereich 24 tangential in die Vorkammer 25 einleiten zu können. Darüber hinaus ist auch der Innenraum 22 des Gehäuses 23 der Nebenaggregategetriebeeinrichtung 13 mit der Vorkammer 25 gekoppelt, wobei bei einer entsprechenden Bedruckung des Innenraums 22 ebenfalls ein Luft-Öl-Volumenstrom aus dem Gehäuse 23 der Nebenaggregategetriebeeinrichtung 13 vorzugsweise tangential in die Vorkammer 25 eingeleitet wird. Die Vorkammer 25 ist mit dem Ölabscheider 17 verbunden, in dessen Innenraum ein poröser Bereich 26 drehbar angeordnet ist, der von dem aus der Vorkammer 25 ausströmenden Luft-Öl-Volumenstrom durchströmbar ist.

Der poröse Bereich 26 ist vorliegend über ein in Wirkverbindung mit weiteren, andere Nebenaggregate 16 der Nebenaggregategetriebeeinrichtung 13 antreibenden Zahnrädern stehendes Zahnrad 27 von der Nebenaggregategetriebeeinrichtung 13 antreibbar und wirkt als Zentrifuge, um den Anteil an Öl des durch den porösen Bereich 26 strömenden Luft-Öl-Volumenstroms soweit als möglich reduzieren zu können. Dabei wird der Ölanteil des Luft-Öl-Volumenstroms im Ölabscheider 17 im Bereich des porösen Bereichs 26 einerseits wie beim Durchströmen eines Prallfilters und andererseits wie im Bereich einer Zentrifuge durch die Rotation des porösen Bereichs 26 durch Abscheiden des Öls aus der Luft reduziert. Das im Bereich des porösen Bereichs 26 aus dem Luft-Öl-Volumenstrom ausgefilterte Öl wird im äußeren Bereich des Ölabscheiders 17 in nicht näher dargestellter Art und Weise über eine Pumpeneinrichtung abgesaugt und zurück in den Öltank 18 geführt. Der im Bereich des Ölabscheiders 17 gereinigte Luftstrom, d. h. ein Fluidvolumenstrom, der eine geringere Ölbeladung als der dem Ölabscheider zugeführte Luft-Öl-Volumenstrom aufweist, wird über einen Leitungsbereich 29 einer hier im Innenraum des Leitungsbereichs 29 angeordneten separaten Einrichtung 28 zum Erhöhen eines Drucks zugeführt und über einen stromab der Einrichtung 28 anschließenden weiteren Leitungsbereich 30 aus dem Flugtriebwerk 1 abgeführt. Der aus dem Flugtriebwerk 1 ausströmende Fluidvolumenstrom weist eine sehr geringe Beladung an Öl auf, so dass im Betrieb des Flugtriebwerks 1 keine von außen sichtbare Rauchfahne entsteht.

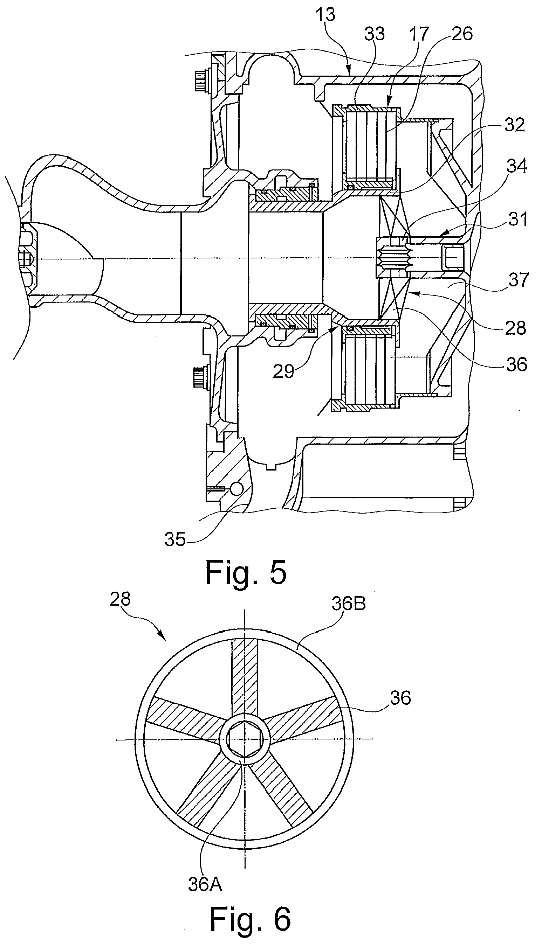

In Fig. 5 ist eine Schnittdarstellung eines Ausschnitts der Nebenaggregategetriebeeinrichtung 13 der Fig. 4 näher gezeigt, wobei eine von dem Zahnrad 27 angetriebene, zumindest bereichsweise als Hohlwelle ausgeführte Hilfsgerätegetriebewelle 31 ersichtlich ist. Die Hilfsgerätegetriebewelle 31 weist hier auf verschiedenen radialen Umfängen angeordnete Wandungsbereiche 32, 33, 34 auf, die hier über umfangsseitig verteilt angeordnete Stege bzw. Fillets 37 drehfest miteinander verbunden sind. Der Ölabscheider 17 ist mit seinem porösen Bereich 26 in radialer Richtung zwischen einem mittleren Wandungsbereich 32 und einem äußeren Wandungsbereich 33 der Hilfsgerätegetriebewelle 31 angeordnet. Die hier als Axialkompressoreinrichtung ausgeführte Einrichtung 28 zum Erhöhen eines Drucks ist vorliegend in radialer Richtung zwischen der zwischen dem mittleren Wandungsbereich 32 und dem inneren Wandungsbereich 34 als Hohlwelle ausgeführten Hilfsgerätegetriebewelle 31 angeordnet, wobei der Leitungsbereich 29 zumindest abschnittsweise durch den mittleren Wandungsbereich 32 und den inneren Wandungsbereich 34 gebildet wird. Bei der gezeigten Ausführung werden somit vorteilhafterweise sowohl die Vorrichtung 17 als auch die Einrichtung 28 gemeinsam von einer einzigen Hilfsgerätegetriebewelle 31 angetrieben.

Der Vorrichtung 17 wird ein Luft-Öl-Volumenstrom durch eine Einlassöffnung 35 zugeführt, wobei der Luft-Öl-Volumenstrom den porösen Bereich 26 der Vorrichtung 17 im Wesentlichen in axialer Richtung der Hilfsgerätegetriebewelle 31 durchströmt. Hierbei wird Öl aus dem Luft-Öl-Volumenstrom separiert und in radialer Richtung nach außen durch den porösen Bereich 26 abgeführt. Der zumindest teilweise von Öl gereinigte Fluidvolumenstrom bzw. die gereinigte Luft wird anschließend um 180° in Richtung der Einrichtung 28 zum Erhöhen des Drucks umgelenkt, wobei der gesamte von dem Ölabscheider 17 abgeführte gereinigte Luftstrom der Einrichtung 28 über den Leitungsbereich 29 zugeführt wird.

Die Einrichtung 28, von der in Fig. 6 eine Ansicht in Längsrichtung gezeigt ist, weist über dem Umfang verteilt mehrere Schaufeln 36 auf, über die ein Druck des gereinigten Luftstroms stromab der Einrichtung 28 in dem Leitungsbereich 29 in Abhängigkeit der Rotationsgeschwindigkeit der Hilfsgerätegetriebewelle 31 erhöht wird. Die Schaufeln 36 sind hier in einem inneren Durchmesserbereich mit einem Nabenbereich 36A und in einem äußeren Durchmesserbereich mit einem Randbereich 36B aufgeführt. Der Nabenbereich 36A ist hierbei mit dem inneren Wandungsbereich 34 und der Randbereich 36B mit dem mittleren Wandungsbereich 32 der Hilfsgerätegetriebewelle 31 verbunden, wobei der innere Wandungsbereich 34 und der mittlere Wandungsbereich 32 den Leitungsbereich 29 bilden.

Um auf einfache Weise im Betrieb des Flugtriebwerks 1 den Druck stromab der Einrichtung 28 zu erhöhen, sind die Schaufeln 36 in gewünschtem Umfang in radialer Richtung, in axialer Richtung und/oder in Umfangsrichtung der Hilfsgerätegetriebewelle 31 gekrümmt bzw. geneigt. Durch die erzielte Druckerhöhung des gereinigten Luftstroms stromab der Einrichtung 28 kann der gereinigte Luftstrom in gewünschtem Umfang auch in einen Bereich des Flugtriebwerks 1 eingeleitet werden, in dem im Vergleich zu einem Umgebungsdruck große Drücke vorliegen. Bei den Ausführungen gemäß Fig. 1 bis Fig. 3 ist es dabei vorgesehen, dass der gereinigte Luftstrom über den mit dem Leitungsbereich 29 zusammenwirkenden weiteren Leitungsbereich 30 in den Nebenstromkanal 2 eingeleitet wird.

Bei hierzu alternativen Ausführungen der Erfindung kann es auch vorgesehen sein, dass die gereinigte Luft in den Kernstrom bzw. den Triebwerkskern eingeleitet wird oder an die Umgebungsdruck aufweisende Umgebung abgeführt wird.

Bei den Ausführungen gemäß Fig. 1 und Fig. 3 mündet der weitere Leitungsbereich 30 stromab einer den Nebenstromkanal 2 in radialer Richtung durchgreifenden Hohlstrebe 38 in den Nebenstromkanal 2, wohingegen bei der Ausführung gemäß Fig. 2 der weitere Leitungsbereich 30 stromauf der Hohlstrebe 38 in den Nebenstromkanal 2 mündet. Prinzipiell kann der weitere Leitungsbereich 30 an einer beliebigen Stelle in den Nebenstromkanal 2 oder auch in den Triebwerkskern 5 bzw. Kernstromkanal münden, da über die Gestaltung der Schaufeln 36 der Einrichtung 28 in Abhängigkeit von der Drehzahl der Hilfsgerätegetriebewelle 31 eine gewünscht große Druckdifferenz zwischen dem Druck stromab der Einrichtung 28 und dem Druck in dem einzuleitenden Bereich des Nebenstromkanals 2, des Triebwerkskerns 5 bzw. der Umgebung eingestellt werden kann. Es kann beispielsweise auch vorgesehen sein, dass der weitere Leitungsbereich 30 in einen Mixer 39 genannten Bereich des Triebwerks 1 mündet, in dem der Nebenstromkanal 2 mit dem Triebwerkskern 5 zusammengeführt wird.

Die Schaufeln der Einrichtung können bei einer alternativen Ausführung der Erfindung integral mit den Stegen bzw. Fillets ausgebildet sein, wobei die Stege bzw. Fillets hierzu im Bereich ihrer stromabgewandten Enden analog zu den Schaufeln 36 der Einrichtung 28 gekrümmt oder geneigt ausgeführt sein können.

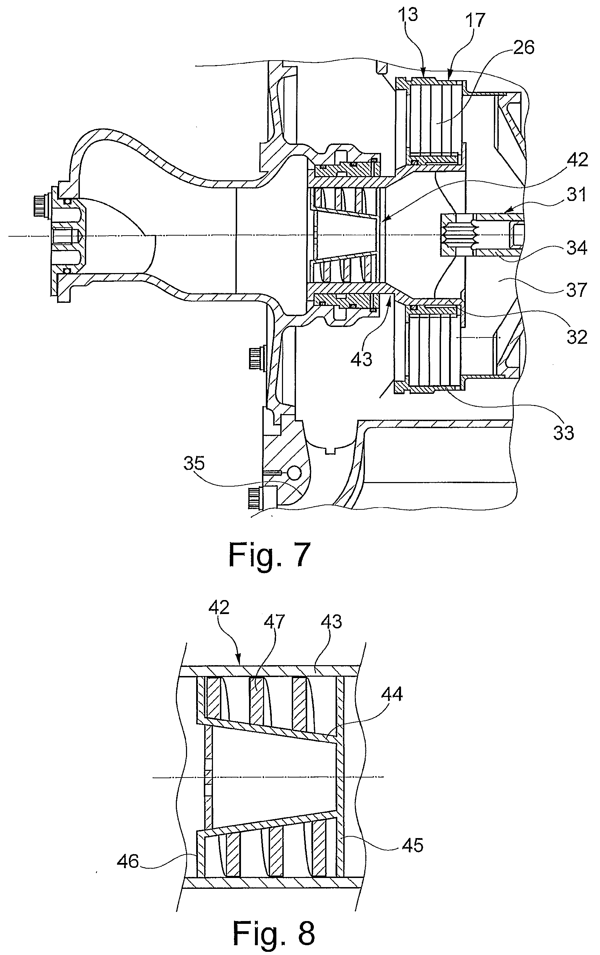

Bei einer weiteren Ausführung einer als Axialkompressoreinrichtung ausgeführten Einrichtung 42 zum Erhöhen eines Drucks weist die Einrichtung gemäß Fig. 7 und Fig. 8 einen schraubenförmig ausgeführten Bereich 47 auf. Die Einrichtung 42 ist hierbei innerhalb eines mit einem konstanten kreisförmigen Querschnitt ausgeführten Leitungsbereichs 43 angeordnet, wobei die Einrichtung 42 den gesamten Querschnitt des Leitungsbereichs 43 einnimmt und in axialer Richtung der Hilfsgerätegetriebewelle 31 vorliegend über federbelastete Sicherungsringe 43, 44 in dem Leitungsbereich 43 festgelegt ist. Zur drehfesten Anbindung an den Leitungsbereich 43, der hier von dem mittleren Wandungsbereich 32 der Hilfsgerätegetriebewelle 31 gebildet ist, kann beispielsweise eine nicht näher gezeigte Nut-Feder-Verbindung vorgesehen sein, so dass die Einrichtung 42 in analoger Weise wie die Einrichtung 28 gemeinsam mit dem Ölabscheider 17 von der Hilfsgerätegetriebewelle 31 angetrieben wird.

Die Einrichtung 42 weist hierbei einen in der Fig. 8 näher ersichtlichen konusförmigen inneren Wandungsbereich 44 auf, an den umfangsseitig und in axialer Richtung verlaufend der schraubenförmige Bereich 37 angeformt ist. Der konusförmige Wandungsbereich 44 ist hier zwischen die Einrichtung 42 in axialer Richtung der Hilfsgerätegetriebewelle 31 begrenzenden Stegen 45, 46 angeordnet, wobei zwischen den Stegen 45, 46 jeweils Eintrittsöffnungen bzw. Austrittsöffnungen für den der Einrichtung 42 von dem Ölabscheider 17 zugeführten gereinigten Luftstrom vorgesehen sind. Der Wandungsbereich 44 ist dabei derart ausgeführt, dass ein von dem gereinigten Luftstrom durchströmter Querschnitt im Bereich der Einrichtung 42 in axialer Richtung der Hilfsgerätegetriebewelle 31 abnimmt.

Auch über die Einrichtung 42 wird der gereinigte Luftstrom im Bereich der Einrichtung 42 bedruckt, so dass der gereinigte Luftstrom stromab der Einrichtung 42 einen größeren Druck als stromauf der Einrichtung 42 aufweist und in gewünschtem Umfang wiederum über den weiteren Leitungsbereich 30 dem Nebenstromkanal 2, dem Triebwerkskern 5 oder der Umgebung zuführbar ist.

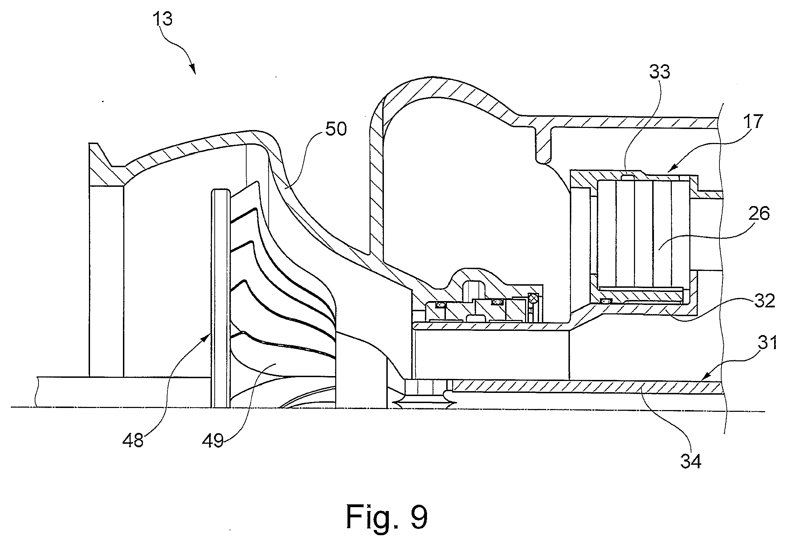

In Fig. 9 ist eine als Radialkompressoreinrichtung ausgeführte Einrichtung 48 gezeigt, die wiederum radial innerhalb eines Leitungsbereichs 50, d. h. in einem von dem Leitungsbereich 50 gebildeten Innenraum, angeordnet ist. Der Leitungsbereich ist hiervon dem mittleren Wandungsbereich 32 der Hilfsgerätegetriebewelle 31 gebildet und wird somit von der Hilfsgerätegetriebewelle 31 gemeinsam mit dem Ölabscheider 17 angetrieben. Die Einrichtung 48 ist vorliegend drehfest auf dem inneren Wandungsbereich 34 der Hilfsgerätegetriebewelle 31 gelagert und weist eine Vielzahl von umfangsseitig angeordneten Schaufeln 49 auf, über die der gereinigte Luftstrom, der der Einrichtung 48 von dem Ölabscheider 17 zugeführt wird, von einer axialen Richtung der Hilfsgerätegetriebewelle 31 in eine radiale Richtung der Hilfsgerätegetriebewelle 31 beschleunigt und anschließend wiederum in eine axiale Richtung der Hilfsgerätegetriebewelle 31 umgelenkt wird.

Der Leitungsbereich 50 weist im Bereich der Einrichtung 48 einen insbesondere an einen Verlauf der Schaufeln 49 in axialer Richtung der Hilfsgerätegetriebewelle 31 angepassten Durchmesserverlauf auf, wobei die Schaufeln 49 der Einrichtung 48 zur Erzielung einer gewünschten Druckerhöhung analog zu den Schaufeln 36 gebogen oder geneigt sein können.

Auch über die Einrichtung 48 ist in vergleichbarer Weise zu den oben beschriebenen Einrichtungen 28, 42 ein Druck des gereinigten Luftstroms stromab der Einrichtung 48 erhöhbar, so dass der Luftstrom in vorbeschriebener Weise über den weiteren Leitungsbereich 30 dem Nebenstromkanal 2, dem Triebwerkskern 5 oder der Umgebung zuführbar ist.

Über die Einrichtung 48 kann im Vergleich zu den Einrichtungen 28, 42 ein großer Druck des gereinigten Luftstroms stromab der Einrichtung 48 gegenüber dem Druck des gereinigten Luftstroms stromauf der Einrichtung 48 auch dann erzielt werden, wenn der gereinigten Luftstrom nur einen geringe Volumendurchfluss aufweist.

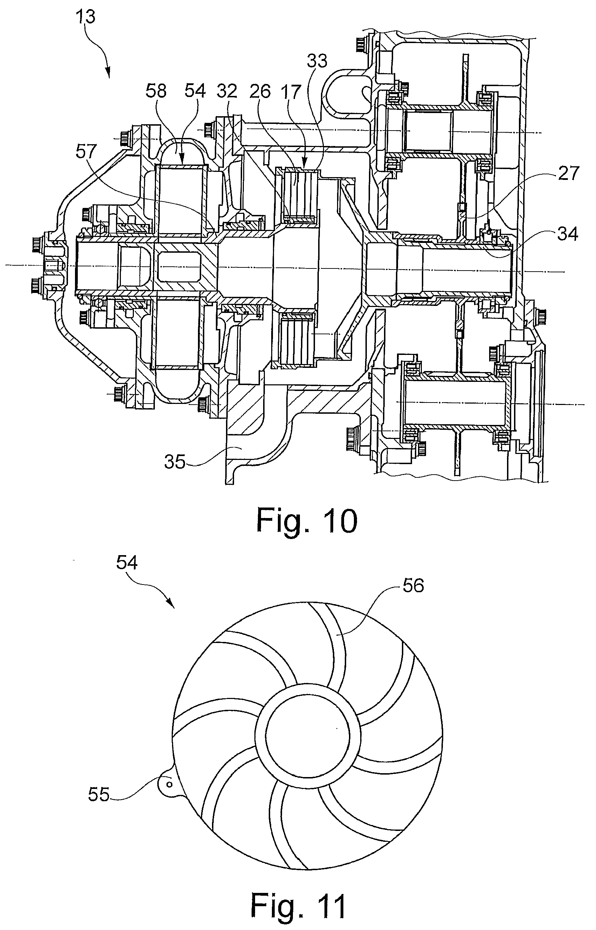

Eine weitere Ausführung einer als Radialkompressoreinrichtung ausgeführten Einrichtung 54 zum Erhöhen eines Drucks ist in Fig. 10 und Fig. 11 ersichtlich. Die Einrichtung 54 ist dabei radial außerhalb des zumindest abschnittsweise stromauf der Einrichtung 54 einen Leitungsbereich 57 bildenden mittleren Wandungsbereichs 32 der Hilfsgerätegetriebewelle 31 gelagert. Die Einrichtung 54 ist über eine in der Fig. 11 näher ersichtliche Anbindungsstelle 55 drehfest gegenüber der Hilfsgerätegetriebewelle 31 festlegbar und wird somit gemeinsam mit dem Ölabscheider 17 von der Hilfsgerätegetriebewelle 31 angetrieben.

Die Einrichtung 54 weist, wie in Fig. 11 gezeigt ist, wiederum mehrere umfangsseitig verteilt angeordnete Schaufeln 56 auf, die jeweils in Umfangsrichtung der Hilfsgerätegetriebewelle 31 gekrümmt bzw. gebogen ausgeführt sind.

Ein der Einrichtung 54 über den Leitungsbereich 57 von dem Ölabscheider 17 zugeführter Luftstrom wird im Bereich der Einrichtung 54 in radialer Richtung umgelenkt und beschleunigt. Hierbei wird der gereinigte Luftstrom in radialer Richtung durch Ausnehmungen des mittleren Wandungsbereichs 32 im Bereich der Einrichtung 54 nach außen geführt, so dass die Einrichtung 54 selbst einen Teil des Leitungsbereichs 57 bildet. Der gereinigte Luftstrom wird nach einer Beschleunigung und Umlenkung durch die Einrichtung 54 über radial außerhalb der Einrichtung 54 angeordnete Hohlräume 58 über den mit den Hohlräumen 58 gekoppelten weiteren Leitungsbereich 30 in oben näher beschriebener Weise dem Nebenstromkanal 2, dem Triebwerkskern 5 oder der Umgebung zugeführt.

Alle Ausführungen der Einrichtungen 28, 42, 48, 54 haben gemein, dass durch die Druckerhöhung des gereinigten Luftstroms im Betrieb des Flugtriebwerks 1 stromab der jeweiligen Einrichtung 28, 42, 48, 54 ein Druck stromauf der jeweiligen Einrichtung 28, 42, 48, 54 reduziert wird. Hierdurch wird der dem Ölabscheider 17 von den Lagerkammern 20, 21 zugeführte Luft-Öl-Volumenstrom vorteilhafterweise in Richtung des Ölabscheiders 17 gesaugt und im Bereich der Lagerkammern 20, 21 liegt ein gegenüber herkömmlichen Ausführungen geringer Druck vor. Dies hat den Vorteil, dass zur Abdichtung der Lagerkammern 20, 21 gegenüber herkömmlichen Ausführungen ohne eine Einrichtung 28, 42, 48, 54 keine oder lediglich eine geringe Menge an unter Hochdruck stehender Luft aus dem Triebwerkskern 5 erforderlich ist.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerksachse
- 13: Nebenaggregategetriebeeinrichtung
- 14: Triebwerksgehäuse
- 15: Antriebswelle
- 16: Nebenaggregate
- 16A: inneres Getriebe
- 17: Vorrichtung, Ölabscheider
- 18: Öltank
- 19: Bauteil
- 20: vordere Lagerkammer
- 21: hintere Lagerkammer
- 22: Innenraum
- 23: Gehäuse
- 24: Leitungsbereich
- 25: Vorkammer
- 26: poröser Bereich
- 27: Zahnrad
- 28: Einrichtung
- 29: Leitungsbereich
- 30: weiterer Leitungsbereich
- 31: Hilfsgerätegetriebewelle
- 32: mittlerer Wandungsbereich
- 33: äußerer Wandungsbereich
- 34: innerer Wandungsbereich
- 35: Einlassöffnung
- 36: Schaufel
- 36A: Nabenbereich
- 36B: äußerer Randbereich
- 37: Steg
- 38: Hohlstrebe
- 39: Mixer
- 42: Einrichtung
- 43: Leitungsbereich
- 44: konusförmiger Wandungsbereich
- 45, 46: Stege
- 47: schraubenförmiger Bereich
- 48: Einrichtung
- 49: Schaufeln
- 50: Leitungsbereich
- 54: Einrichtung
- 55: Anbindungsstelle
- 56: Schaufeln
- 57: Leitungsbereich
- 58: Hohlraum

## Patentansprüche

1. Flugtriebwerk (1) mit einer Vorrichtung (17) zum Abscheiden von Öl aus einem Luft-Öl-Volumenstrom, wobei ein Fluidvolumenstrom mit geringerer Ölbeladung als der der Vorrichtung (17) zugeführte Luft-Öl-Volumenstrom über einen Leitungsbereich (29, 43, 50, 57) aus der Vorrichtung (17) abführbar ist, **dadurch gekennzeichnet, dass** der Fluidvolumenstrom über den Leitungsbereich (29, 43, 50, 57) einer Einrichtung (28, 42, 48, 54) zuführbar ist, mittels der ein Druck in dem Leitungsbereich (29, 43, 50, 57) stromab der Einrichtung (28, 42, 48, 54) erhöhbar ist.

2. Flugtriebwerk nach Anspruch 1, **dadurch gekennzeichnet, dass** die Einrichtung (28, 42, 48, 54) zur Erhöhung eines Drucks innerhalb des Leitungsbereichs (29, 43, 50) angeordnet ist.

3. Flugtriebwerk nach einem der Ansprüche 1 oder 2, **dadurch gekennzeichnet, dass** der Leitungsbereich (29, 43, 50, 57) mit einem weiteren Leitungsbereich (30) zusammenwirkt, wobei der weitere Leitungsbereich (30) in einen Kernstromkanal (5) oder einen Nebenstromkanal (2) des Flugtriebwerks (1) mündet.

4. Flugtriebwerk nach einem der Ansprüche 1 bis 3, **dadurch gekennzeichnet, dass** die Einrichtung (28, 42, 48, 54) zur Erhöhung eines Drucks als Kompressoreinrichtung, insbesondere als Axialkompressoreinrichtung oder als Radialkompressoreinrichtung, ausgeführt ist.

5. Flugtriebwerk nach einem der Ansprüche 1 bis 4, **dadurch gekennzeichnet, dass** die Einrichtung (28, 42, 48, 54) zur Erhöhung eines Drucks mit mehreren umfangsseitig verteilt angeordneten Schaufeln (36, 49, 56) ausgeführt ist.

6. Flugtriebwerk nach Anspruch 5, **dadurch gekennzeichnet, dass** die Schaufeln (36, 49, 56) der Einrichtung (28, 42, 48, 54) bezüglich einer Strömungsrichtung der gereinigten Luft in axialer Richtung, in radialer Richtung und/oder in Umfangsrichtung gebogen bzw. gekrümmt ausgeführt sind.

7. Flugtriebwerk nach einem der Ansprüche 5 oder 6, **dadurch gekennzeichnet, dass** die Schaufeln (36, 49, 56) der Einrichtung (28, 42, 48, 54) zur Erhöhung eines Drucks integral mit Stegen (37) ausgeführt sind, die zur Lagerung eines Teils (26) der Vorrichtung (17) zum Abscheiden von Öl vorgesehen sind.

8. Flugtriebwerk nach einem der Ansprüche 1 bis 7, **dadurch gekennzeichnet, dass** der Leitungsbereich (29, 43, 50), dem die Einrichtung (28, 42, 48, 54) zugeordnet ist, durch eine zumindest abschnittsweise als Hohlwelle ausgeführte Welle (31) gebildet ist, die vorzugsweise eine Hilfsgerätegetriebewelle (31) einer Hilfsgerätegetriebeeinrichtung (13) darstellt.

9. Flugtriebwerk nach Anspruch 8, **dadurch gekennzeichnet, dass** die Hilfsgerätegetriebeeinrichtung (13) im Bereich eines Außengehäuses (14) des Flugtriebwerks (1) angeordnet ist.

10. Flugtriebwerk nach Anspruch 8, **dadurch gekennzeichnet, dass** die Hilfsgerätegetriebeeinrichtung (13) im Bereich eines einen Nebenstromkanal (2) von einem Kernstromkanal (5) trennenden Gehäuses (19) angeordnet ist.

11. Flugtriebwerk nach einem der Ansprüche 1 bis 10, **dadurch gekennzeichnet, dass** die Einrichtung (42) zur Erhöhung eines Drucks einen schraubenförmig ausgeführten Bereich aufweist.

12. Flugtriebwerk nach einem der Ansprüche 1 bis 11, **dadurch gekennzeichnet, dass** die Einrichtung (28, 42, 48, 54) zur Erhöhung eines Drucks von einer Hilfsgerätegetriebewelle (31) einer Hilfsgerätegetriebeeinrichtung (13) angetrieben ist, die insbesondere auch zum Antrieb der Vorrichtung (17) zum Abscheiden von Öl vorgesehen ist.
